# EUROPEAN PATENT APPLICATION

(11) **EP 1 382 434 A1**
(43) Date of publication of application: **21.01.2004**
(21) Application number: 03077104.2
(22) Date of filing: 03.07.2003
(51) Int. Cl.: B29C 67/00, B29C 70/66

(54) **Syntactic foam articles and related methods**

(30) Priority: 15.07.2002 US 195685
(71) Applicant: The Boeing Company, St. Louis, MO 63166 (US)
(72) Inventor: Philips, Walter A., Tempe, AZ 85282 (US); Berg, Donald J., Mesa, AZ 85282 (US); Low, Steven C., Mesa, AZ 85205-5817 (US); Clark, Jerry G., Phoenix, AZ 85044 (US)
(74) Representative: Land, Addick Adrianus Gosling

(57) **Abstract**

A method for making an article (22) of syntactic foam includes spreading a layer of a mixture including particulate resin and microballoons across a surface (18). At least a portion of the mixture is selectively heated (34) so as to cause the portion to assume a desired shape for at least part of the article. The heating is performed until the resin flows and wets the microballoons to form a solid mass. The method allows a finished part to be fabricated in a single sintering operation with little or no subsequent machining.

## Description

### FIELD OF THE INVENTION

The present invention relates to syntactic materials and, more particularly, to using selective laser sintering to make articles of syntactic foam materials.

### BACKGROUND OF THE INVENTION

Syntactic foam materials have low density and weight and are utilized for a variety of purposes. Thermoplastic and thermoset foams are particularly useful in aerospace applications. Thermoplastic syntactic foam can be used as a lossy structural housing for electronics in aircraft. Such foam may be used, for example, as a housing for an antenna within the leading edge of an aircraft wing. Thermoset syntactic foam also has characteristics desirable for aerospace applications. For example, thermoset foam can be fabricated with additives so as enable the foam to absorb radiofrequency signals.

A thermoset or thermoplastic syntactic foam material can be fabricated by blending particulate resins with a dry mixture of microballoons and fibers. The blend of resin, microballoons and fibers is heated in an oven and compressed to form a homogeneous rectangular billet of syntactic foam. Methods for preparing thermoplastic foam material are described in Harrison et al., U.S. Patent Nos. 5,532,295 and 5,691,390, the disclosures of which are incorporated herein in their entirety. Methods for preparing thermoset foam material are described in Harrison et al., U.S. Patent Nos. 6,068,915, 6,074,475 and 6,168,736 B1, the disclosures of which are incorporated herein in their entirety.

A billet of syntactic foam material typically is machined into a structural shape, for example, a desired aircraft part. During the machining process, it is typical for over half of the billet material to be turned into waste. Machining is performed using a five-axis machine that can be damaged by small particles of syntactic foam tending to infiltrate the bearings, races, tool bits and other moving parts of the machine. The machining process and the materials used are very expensive, and thus the cost of an acceptable part can be quite high.

### SUMMARY OF THE INVENTION

The present invention, in one preferred embodiment, is directed to a method for making an article of syntactic foam. The method includes spreading a layer of a mixture including particulate resin and microballoons across a surface. At least a portion of the mixture is selectively heated so as to cause the portion to assume a desired shape for at least part of the article. The cause the portion to assume a desired shape for at least part of the article. The heating is performed to cause the resin to flow and wet the microballoons to form a solid mass.

The above described method can reduce the time to mix and bond the component materials and allows a finished part to be fabricated in a single operation. Waste is substantially eliminated because only the material needed to fabricate the final shape of the part is used. Excess material can be collected and reused for another part. Thus the cost of producing specialized components can be significantly reduced.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a diagram of a conventional selective laser sintering machine; and

Figure 2 is a flow diagram of a method for making an article of syntactic foam according to one embodiment of the present invention.

### DETAILED DESCRIPTION OF THE PREFERRED EMBODIMENTS

The following description of the preferred embodiment(s) is merely exemplary in nature and is in no way intended to limit the invention, its application, or uses.

An exemplary embodiment of a method for making an article of syntactic foam shall be described herein with reference to selective laser sintering (SLS). The invention, however, is not so limited. Embodiments are contemplated wherein, for example, a heat source other than a laser is used in a heating step further described below. Additionally, embodiments are possible wherein more than or fewer than two containers are used to hold mixture(s) for a spreading step, and wherein the spreading of mixture(s) is performed in more than or fewer than two directions, as further described below.

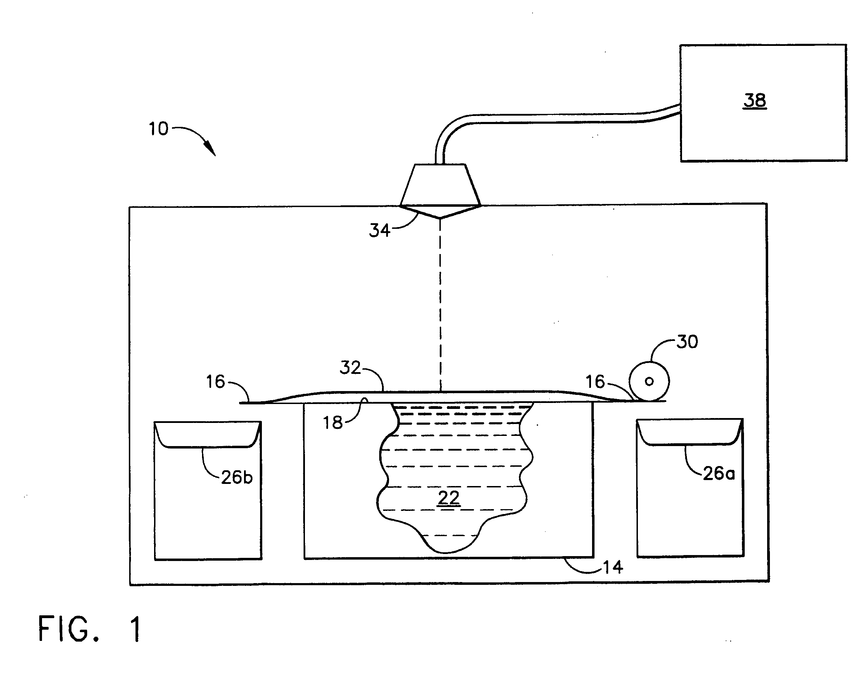

Selective laser sintering is a process in which a computer-controlled laser is used typically to form plastic or metal articles, e.g. machine prototypes or parts, according to a CAD (computer-aided design) model. A simplified diagram of a conventional selective laser sintering machine is indicated generally as 10 in Figure 1. A formation chamber 14 is covered by a flat bed 18 on which slices of an article 22 can be formed consecutively, as further described below, until the article is completely formed.

In conventional SLS, powdered plastic or metal material is placed in two tanks or containers 26 located at opposite ends 16 of the bed 18. Each container 26 is accessible by a roller or spreader 30. The spreader 30 picks up a quantity of the powdered material from one container, e.g. container 26a, and, while moving across the bed 18 in the direction of the opposite container 26b, spreads a thin layer 32 of the material onto the bed 18.

A laser 34 is directed by a processor 38 to "draw" a cross section or slice of the article in the powder layer. The laser is moved in accordance with a three-dimensional CAD model, stored in the processor 38, for the article 22. The laser sinters the plastic or metal powder, which fuses to form a slice of the article 22. The bed 18 then is raised relative to the newly formed slice. The spreader 30 picks up more of the powdered material from the opposite container 26b and repeats the above process while moving back toward the container 26a. The laser 34 sinters another slice of the article on top of the previous slice, and the formation of slices continues until the article is finished.

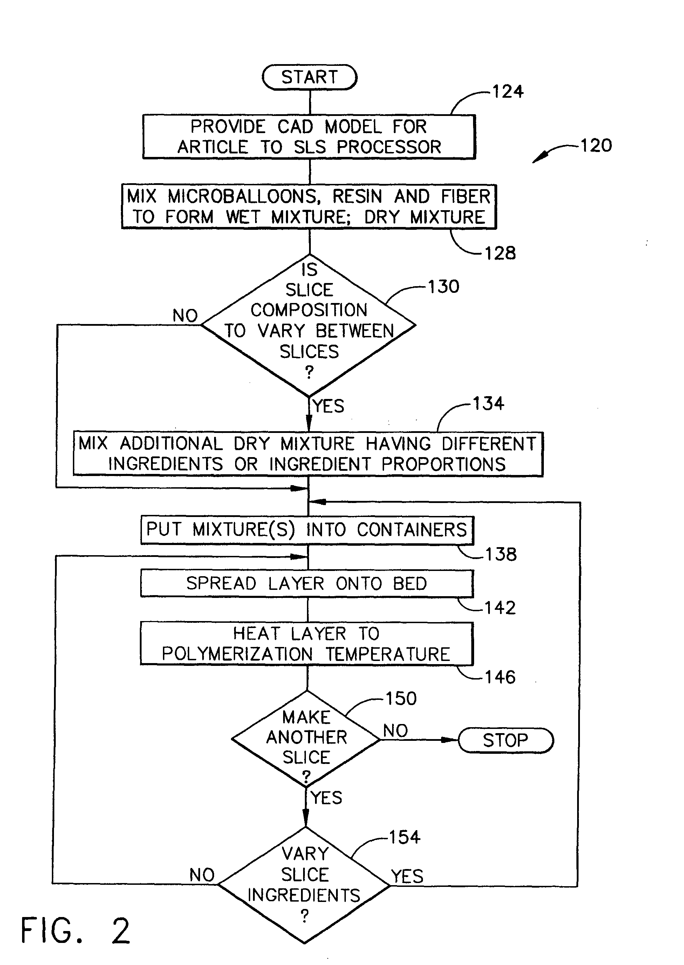

A method for making an article of syntactic foam in accordance with a preferred embodiment of the present invention shall now be described. Figure 2 is a flow diagram depicting a method 120 for making an article of syntactic foam. An article fabricated according to the embodiment shown in Figure 2 may be made of thermoplastic foam, produced from ingredients and proportions thereof as described in Harrison et al., U.S. Patent Nos. 5,532,295 and 5,691,390, the disclosures of which are incorporated herein by reference in their entirety. An article may also be made of thermoset foam, produced from ingredients and proportions thereof as described in Harrison et al., U.S. Patent Nos. 6,068,915, 6,074,475 and 6,168,736 B1, the disclosures of which are incorporated herein by reference in their entirety. Other embodiments are also possible wherein other thermoplastic or thermoset foams are produced.

The fabrication method 120 is begun at step 124 wherein a computer-aided design (CAD) three-dimensional model is supplied, as known in the art, to a selective laser sintering machine such as the machine 10 (shown in Figure 1). The SLS machine may be, for example, a Sinterstation 2500 machine by 3D Systems, Valencia, California. Specifically, file(s) of three-dimensional data are transferred to the sintering machine 10 in a format that would allow the machine to form the article one slice at a time as further described below.

At step 128, a mixture is made of a particulate thermoplastic or thermoset resin, commercially available microballoons and fibers. One such thermoplastic resin is a partially polymerized oligomeric precursor to a polyetherimide polymer, for example, Ultem™ 1010P, available from General Electric Company and which polymerizes into a polyetherimide polymer known as Ultem™ 1000, also a trademark of General Electric Company. Preferable thermoset resins include particulate uncured epoxy resins, for example, H. B. Fuller IF-1893 and O'Brien's Powder Products Inc. Clear EFCS9. The microballoons are small (for example, between about 5 and 150 micrometers in diameter), hollow, generally spherical and may be primarily of silicon dioxide. The fibers are preferably short-length (i.e. no more than about 8000 micrometers long) and can have various electrical, mechanical and other properties, depending on the type of article or part that is to be made. Thus, for example, the fibers can be electrically conductive or electrically absorptive.

In a mixture for producing thermoplastic foam, typically the microballoons are present in amounts between 3 and 85 parts by volume, the resin is present in amounts between 85 and 3 parts by volume, and fibers are present in amounts between zero and 20 parts by volume. In a mixture for producing thermoset foam, typically the microballoons are present in amounts between 90 and 10 percent by volume, the resin is present in amounts between 10 and 90 percent by volume, and fibers are present in amounts between 0.001 and 5 percent by volume. The mixture is dispersed in a fluid, as described in the above numbered patents issued to Harrison et al., to obtain a uniform particle distribution. Thereafter the fluid is removed, leaving a mixture having a consistency like that of wet sand. The mixture then is dried.

It may be desirable to provide compositional differences between or among consecutive slices in an article to be formed. For example, where it is contemplated that an article is to be used in a low observable application, it can be desirable for the article to exhibit a dielectric gradient over a plurality of slices. In another embodiment, it could be desirable for an article to have a plurality of alternating slices with varying ingredients or varying ingredient proportions. It could be desirable, for example, for every other slice of an article to include conductive fibers as an ingredient. Thus, at step 130, it is determined whether slice composition is to be varied between or among slices. If so, at step 134, one or more additional mixtures are provided which include ingredients and/or ingredient proportions different from those of the mixture described at step 128.

At step 138, the dried mixture prepared at step 128 is poured into one or both of the containers 26 of the sintering machine 10. A different mixture may be poured into one or both of the containers 26 if other mixture(s) are also to be used in forming slices. At step 142, a layer of the mixture from one of the containers 26 is spread onto the bed 18 by the spreader 30. A layer of the mixture is spread in a thickness dependent on the particular article being made and on the ingredients being spread. A layer typically is between about 0.003 and 0.020 inches thick, and preferably about 0.005 inches thick.

At step 146 the laser 34 is directed, under guidance by the processor 38 in conformity with the CAD model, to heat at least a portion of the layered mixture. The laser 34 may be, for example, a carbon dioxide laser, although other types of lasers also could be used. The heating is performed in accordance with applicable heating time and temperature parameters stored in the processor 38. The laser beam fuses the particles of the mixture, in a desired shape corresponding to a slice of the article or part being fabricated. The heating is continued until the resin flows and wets the microballoons to form a solid mass. As used herein, the term "solid" refers to a non-fluid substance that may be porous. More specifically and for example, where the resin is a thermoplastic resin, the heating causes the resin to chain-extend and form a high molecular-weight polymer. Where the resin is a thermoset resin, the heating causes the resin to reach and exceed a glass transition temperature and thereafter to reach a curing temperature, at which the resin sets and cross-links to form a thermoset polymeric structure.

At step 150 it is determined whether another slice is to be made. if so, it is determined at step 154 whether the ingredients and/or ingredient proportions are to be changed in the next slice to be formed. If so, the contents of one or both containers 26 are changed at step 138. The process beginning at step 142 is repeated to form another slice of the article onto the previously made slice. During the fabrication of a plurality of slices, it can be preferable to maintain the heating temperature within a predetermined range that facilitates uniform shape and density in the resulting article. For example, when a thermoplastic material is used to fabricate an article, it can be preferable to maintain the heating temperature just below a melting point temperature for the material during the layering process. Similarly, when a thermoset material is used, it can be preferable to keep the heating temperature within a predetermined range so as to control the chemical reaction that occurs during curing.

In other embodiments, the heating temperature is varied from one slice to another, to selectively vary densities within slices of the article. Thus an article can be made having varying density-dependent mechanical and/or electrical properties. In one preferred embodiment, for example, to form an article having a dielectric gradient, mixtures are successively used in one or both containers 26 to produce slices that vary in their dielectric characteristics.

As previously mentioned, more than or fewer than two containers could be used to hold mixture(s), and the spreading of mixture(s) could be performed in more than or fewer than two directions. For example, an embodiment could be configured wherein layers are spread from four containers and in four orthogonally intersecting directions over a bed or surface. It can be seen that many combinations of numbers and locations of containers, and numbers and directions of spreading steps, are possible.

The above described method allows a finished part to be fabricated in a single sintering operation, with little or no subsequent machining. The rate of slice formation ranges typically between about 1.00 and 1.25 inches per hour. Excess material can be collected and reused for another part, and thus waste is substantially eliminated. Needs for an oven and complex machining are eliminated, and fabricating time and costs are reduced.

The description of the invention is merely exemplary in nature and, thus, variations that do not depart from the gist of the invention are intended to be within the scope of the invention. Such variations are not to be regarded as a departure from the spirit and scope of the invention.

## Claims

1. A method for making an article of syntactic foam, the method comprising the steps of:
spreading a layer of a mixture including particulate resin and microballoons across a surface; and
selectively heating at least a portion of the mixture so as to cause the portion to assume a desired shape for at least part of the article, wherein the heating is performed to cause the resin to flow and wet the microballoons to form a solid mass.

2. The method of claim 1, wherein the surface includes a surface of a previously formed slice of the article, the method further comprising the step of repeating the spreading and heating steps to form another slice of the article.

3. The method of claim 2, further comprising the step of selectively varying a heating temperature for the heating step over a plurality of slices.

4. The method of claim 2, further comprising the step of selectively varying a direction in which the spreading step is performed over a plurality of slices.

5. The method of claim 2, further comprising the step of selectively varying ingredients of the mixture for the spreading step over a plurality of slices.

6. The method of claim 5, further comprising the steps of:
spreading a layer of a first mixture from one of a plurality of containers to form a first slice; and
spreading, onto the first slice, a layer of a second mixture from another container.

7. The method of claim 6, wherein at least one of the first and second mixtures includes conductive fibers.

8. The method of claim 6, wherein at least one of the first and second mixtures includes absorptive fibers.

9. The method of claim 1, further comprising the step of providing the desired shape using a computer-generated model.

10. The method of claim 1, further comprising the step of heating the portion to a temperature above a glass transition temperature for the resin.

11. The method of claim 1, further comprising the step of heating the portion to a curing temperature for the resin.

12. The method of claim 1, further comprising the step of including fibers in the mixture.

13. The method of claim 1, further comprising the step of drying the mixture before performing the spreading step.

14. The method of claim 1, wherein the resin includes at least one of a thermoplastic resin and a thermoset resin.

15. The method of claim 1, further comprising the step of repeating the spreading and heating steps to form a dielectric gradient over a plurality of slices.

16. The method of claim 1, wherein the heating step is performed using a directed heat source.

17. The method of claim 16, wherein the directed heat source includes a laser.

18. A method for making an article of syntactic foam, the method comprising the steps of:
spreading across a surface a layer that includes one of a particulate thermoplastic resin and a particulate thermoset resin; and
using a directed heat source to selectively heat at least a portion of the layer so as to cause the portion to assume a desired shape for at least part of the article, wherein the heating is performed to cause the resin to flow to form a solid mass.

19. The method of claim 18, further comprising the step of mixing the particulate resin with microballoons to form a mixture, and wherein the spreading step is performed using the mixture.

20. The method of claim 19, wherein the heating step is performed until the resin flows to wet the microballoons.

21. The method of claim 18, wherein the surface includes a surface of a previously formed slice of the article, the method further comprising the step of repeating the spreading and heating steps to form another slice of the article.

22. The method of claim 18, further comprising the step of heating the portion until the portion polymerizes.

23. An article made of syntactic foam comprising microballoons, fibers and one of a thermoplastic resin and a thermoset resin, the article further comprising a plurality of slices layered together using a directed heat source.

24. The article of claim 23, wherein at least two contiguous slices differ from each other in one of ingredients and ingredient proportions.
